# EUROPEAN PATENT APPLICATION

(11) **EP 4 071 052 A1**
(43) Date of publication of application: **12.10.2022**
(21) Application number: 22166769.4
(22) Date of filing: 05.04.2022
(51) Int. Cl.: B64C 21/02, B64C 21/08

(54) **SYSTEM AND METHOD OF ACTIVE CONTROL OF THE FLOW ON THE AERODYNAMIC SURFACE**

(30) Priority: 06.04.2021 PL 43753121
(71) Applicant: SIEC BADAWCZA LUKASIEWICZ-INSTYTUT LOTNICTWA, 02-256 Warszawa (PL)
(72) Inventor: STRYCZNIEWICZ, Wit, 02-348 Warszawa (PL)
(74) Representative: Kuczynska, Teresa

(57) **Abstract**

The invention relates to a system for actively controlling flow on aerodynamic surface (100) comprising at least one dispensing unit (1, 2, 3, 4, 5), a control unit (400), a compressed air source (300), and a sensor (420) provided on the aerodynamic surface (100). The dispensing unit (1, 2, 3, 4, 5) has a nozzle (210, 211, 212, 213, 214) terminating with an outlet opening (250, 251, 252, 253, 254) in the aerodynamic surface (100), and a valve (220, 221, 222, 223, 224) which is connected to the nozzle (210, 211, 212, 213, 214) and through which each dispensing unit (1, 2, 3, 4, 5) is in fluid communication with a compressed air source (300), and furthermore a sensor (540, 541, 542, 543, 544) is provided in at least one nozzle (210, 211, 212, 213, 214). The sensors (420, 540, 541, 542, 543, 544) are connected to a control unit (400) which in turn is connected separately to each of the valves (220, 221, 222, 223, 224) of the dispensing units (1, 2. 3, 4, 5). The system further comprises a vacuum source (500) and the - connected to the nozzle (210, 211, 212, 213, 214) - valve (220, 221, 222, 223, 224) of each of the dispensing units (1, 2, 3, 4, 5) is a distributing valve connected to the compressed air source (300) and the vacuum source (500), and this distributing valve (220, 221, 222, 223, 224) allows an alternating supplying of air from the compressed air source (300) to the nozzle (210, 211, 212, 213, 214) and drawing air from the nozzle (210, 211, 212, 213, 214) by means of the vacuum source (500).

The invention relates also to a method for actively controlling flow on aerodynamic surface (100), in which a physical quantity is measured on the aerodynamic surface (100), on the basis of which the physical quantity an occurrence of flow separation phenomenon on the aerodynamic surface (100) is determined, and then after detecting the flow separation on the aerodynamic surface (100) a compressed air from a compressed air source (300) is supplied to the aerodynamic surface (100) through a row of outlet openings (250, 251, 252, 253, 254) in the aerodynamic surface (100) and nozzles (210, 211, 212, 213, 214) connected to the outlet openings (250, 251, 252, 253, 254) until a disappearance of the flow separation on the aerodynamic surface (100) is detected, wherein the air supplied to each of the outlet openings (250, 251, 252, 253, 254) has a pulsating flow, which is achieved by alternately supplying each nozzle (210, 211, 212, 213, 214) with air from the compressed air source (300) and drawing air from the nozzle (210, 211, 212, 213, 214) using a vacuum source (500).

## Description

The present invention relates to a system and method for actively controlling flow on an aerodynamic surface. In particular, the invention relates to actively controlling flow on an aerodynamic surface by means of a pulsating gas flow through a nozzle with a size of the order of a few millimetres. The invention relates to the field of aerodynamics, and thus concerns the phenomena related to the motion of gases, as well as the motion of solid bodies in a gaseous medium and the forces acting on these bodies.

Aerodynamic forces arise when a body moves through the air or when the gas flows due to pressure differences in the channels. In general, the aerodynamic force can be broken down into the lift force acting in the direction perpendicular to the direction of flow on the aerodynamic surface and the drag force acting in the direction parallel to the direction of flow on the aerodynamic surface. In view of the present invention, an important issue is the flow separation phenomenon which leads to an increase in aerodynamic drag force or a decrease in lift force.

The flow control on an aerodynamic surface aims to change the flow around a large area of the aircraft, channel or nozzle, leading to the desired effect. A distinction is made between active and passive flow control on the aerodynamic surface. Passive flow control is based on the redistribution of energy and momentum of the flow around the aircraft (e.g. by means of vortex generators). Active control requires an external energy source to either provide a high energy fluid to the flow or to remove a low energy flow in the vicinity of the aircraft surface. The advantage of active flow control on the aerodynamic surface is the ability of adapting the operation to the current flow condition.

Active flow control on an aerodynamic surface requires use of devices capable to deliver or to receive energy, momentum and/or fluid to or from the low-energy flow in the direct vicinity of the surface, e.g. of an aircraft. The use of periodic forcing allows the desired effect to be achieved with a lower mass flow than in the case of constant blow off.

By controlling the flow on the aerodynamic surface, the occurrence of flow separation can be delayed, resulting in increased lift force.

Publication US 2010/0243819 A1 discloses a device for delaying the separation of a boundary layer in a flow of air on a surface. The device comprises orifices formed in the surface and connected by ducts to valves supplying compressed air from a compressed air source. In an embodiment, the valves are electromagnetic valves and the source is an aircraft engine compressor or an additional auxiliary compressor. The valves are controlled by a microprocessor system.

Methods for actively controlling flow on an aerodynamic surface involving the supply of pulsating compressed air at different frequencies to a row of outlet openings on the aerodynamic surface are generally known and are disclosed in, for example, US 8,382,043 B1, EP 2 650 213 A1 and EP 1 623 922 A1.

The prior art solutions do not solve the problems of efficiently delivering a pulsating flow at high frequency while individually controlling the outflow from the openings formed in the aerodynamic surface. In other words, the prior art solutions do not provide the technical means to achieve high blow off frequency values while allowing precise control of the blow off from each nozzle separately.

The object of the present invention is to solve the above-mentioned technical problems.

According to the invention, the system for actively controlling flow on the aerodynamic surface includes at least one dispensing unit, a control unit, a compressed air source, and a sensor provided on the aerodynamic surface, wherein the dispensing unit has a nozzle terminating in an outlet opening in the aerodynamic surface and a valve, connected to the nozzle, through which valve each dispensing unit is in fluid communication with a source of compressed air, and furthermore a sensor is provided in at least one nozzle and the said sensors are connected to the control unit, which control unit is connected separately to each of the valves of the dispensing units. The system according to the invention is characterized in that it comprises a vacuum source, and the - connected to the nozzle - valve of each dispensing unit is a distributing valve connected to the compressed air source and to a vacuum source, and this distributing valve allows alternately supplying air from the compressed air source to the nozzle and drawing air from the nozzle by means of the vacuum source.

Preferably, each dispensing unit is in fluid communication with the compressed air source via a pneumatic line supplied to the valves.

Preferably, each dispensing unit is in fluid communication with the vacuum source via a pneumatic line supplied to the valves.

Preferably, the outlet openings of the nozzles are positioned in the line of occurrence of flow separation on the aerodynamic surface.

Preferably, the valves are connected directly to the nozzle via a rigid connection.

Preferably, the valves are connected to the nozzle via a flexible connection of any length.

Preferably, each distributing valve comprises an element for alternating switching the flow from the compressed air source to the nozzle and from the nozzle to the vacuum source actuated by means of an electromagnetic coil or piezoelectric system. In a preferred embodiment, the opening and closing element of the valve is a ball or a piston.

Preferably, the electromagnetic coil of the distributing valve provides oscillations of the switching element with a frequency of 1 to 1000 Hz.

Preferably, the compressed air source is one of an aircraft turbine engine compressor, a dedicated compressor, a compressor system powered by the aircraft electrical system, and a compressor system powered by a dedicated battery.

Preferably, the vacuum source is one of a dedicated pump, a pump system powered by aircraft electrical system, and a pump system powered by a dedicated battery, or the vacuum is caused by a flow of external gas.

Preferably, all the distributing valves have the same technical parameters or at least one of the distributing valves has different technical parameters to the others.

Preferably, the sensor provided on the aerodynamic surface is a pressure sensor.

Preferably, the aerodynamic surface is an aircraft wing.

Preferably, the aerodynamic surface is an inlet or outlet channel of a fluid-flow machine.

Preferably, the sensor provided in each nozzle is a pressure sensor or a sensor of velocity of air flow through the nozzle.

In the method of actively controlling flow on aerodynamic surface according to the invention, a physical quantity on the aerodynamic surface is measured, based on which the physical quantity an occurrence of flow separation phenomenon on the aerodynamic surface is determined, and then, after the occurrence of the flow separation on the aerodynamic surface is detected, compressed air from a compressed air source is delivered onto the aerodynamic surface through a row of outlet openings in the aerodynamic surface and nozzles connected to the outlet openings until the air flow separation on the aerodynamic surface is detected to have disappeared, wherein the air flow supplied to each of the outlet openings is pulsating. The method according to the invention is characterised in that the pulsating air flow in the outlet openings is achieved by alternately supplying each nozzle with air from the compressed air source and drawing air from the nozzle using a vacuum source.

Preferably, alternately supplying compressed air to each nozzle and drawing the flow exiting the nozzle is carried out through a distributing valve alternatively switching between the compressed air source and the vacuum source.

Preferably, the value of the vacuum is selected by a control system on the basis of the value of the signal from a sensor provided in the nozzle in such a way that an accelerated stopping of the flow in the nozzle occurs after switching the valve from supplying the nozzle with compressed air to supplying it from the vacuum source.

Preferably, air is supplied onto the aerodynamic surface through all the outlet openings simultaneously, through every second outlet opening in the row or sequentially through each subsequent outlet opening in the row.

Preferably, the measured physical quantity is the pressure at the trailing edge of the aerodynamic surface, and as a condition for the occurrence of flow separation it is assumed that a value of the pressure coefficient Cp calculated from the pressure measurement is negative.

Preferably, by alternately supplying compressed air to each nozzle and drawing an air flow, an alternating flow in the nozzle in two mutually opposite directions is obtained.

Preferably, by alternately supplying compressed air to each nozzle and drawing an air flow, alternating states of the air flow and stopping of the air flow are obtained in the nozzle.

The solutions according to the present invention can be used as a support system or as an alternative to the currently used devices for increasing the lift force of wings, such as flaps and slots. By precisely controlling the flow through the nozzle, the invention allows for increased safety during landing and take-off of the aircraft. The solutions according to the present invention can also be used to increase the efficiency of the fluid-flow machines by eliminating flow separation in the inlet or outlet channels.

Due to its structural simplicity, the solution according to the present invention is universal in relation to known solutions, and moreover, it is easy to implement.

At the same time, thanks to the possibility of modulating the outflow from a single nozzle and implementing the outflow sequence from the nozzle array, it is possible to apply an optimal flow control strategy on the aerodynamic surface for given flow conditions.

Moreover, the use of periodic forcing allows the desired effect to be achieved with a lower mass flow than in the case of constant blow off.

The solution of sequential blowing off from the nozzles makes it possible to increase the mixing effect of the boundary layer, contributing to an increase of the air momentum in the separation area and to achieve a sticking effect of the separation.

The objects of the invention are illustrated in the embodiments in the drawing, in which fig. 1 shows schematically an embodiment of the system according to the invention, figs.2a and 2b show two examples of valve operation, fig. 3 shows an embodiment of the method of control of the system, and fig. 4 shows an example of elimination of the flow separation on an aerodynamic surface using the solution according to the invention.

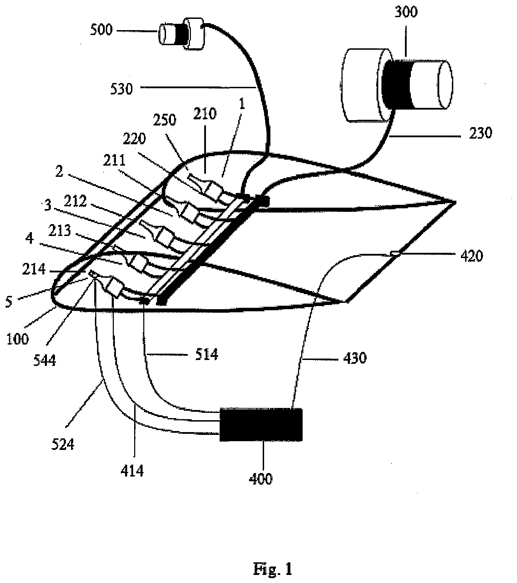

In the embodiment of the system according to the invention schematically represented in fig. 1, the system comprises five dispensing units 1, 2, 3, 4, 5 and the aerodynamic surface 100 is an aircraft wing having leading edge, trailing edge and chord. For the sake of legibility, in fig. 1 only the first dispensing unit 1 and the fifth dispensing unit 5 are shown in more detail. Each of the dispensing units 1-5 includes one nozzle, designated 210, 211, 212, 213 and 214, respectively, for increasing the outlet velocity. Each of the nozzles 210-214 is connected to an electromagnetic distributing valve 220, 221, 222, 223 and 224, respectively. For example, the electromagnetic distributing valve for nozzle 210 is designated 220. Each of the nozzles 210-214 has an outlet opening 250, 251, 252, 253, 254, respectively. For example, as illustrated in fig. 1, the nozzle 210 has the outlet opening 250. Likewise, the nozzles 211-214 have the outlet opening 251-254, respectively.

Each of the dispensing units 1-5 is connected via a pneumatic conduit 230 to a compressed air source 300, which is a turbine engine compressor. In other embodiments, the compressed air source 300 may be a dedicated compressor, a compressor system powered by an aircraft electrical system, or a compressor system powered by a dedicated battery.

Each of the dispensing units 1-5 is connected via a pneumatic conduit 530 to a vacuum source 500, which is a vacuum pump. In other embodiments, the source 500 may be a vacuum pump system powered from the electrical system of the aircraft or the vacuum may be generated by the drag surface of the wing.

The distributing valve 220 - 224 of each of the nozzles 210-214 is connected separately via a control line 410, 411, 412, 413, 414, respectively, to a control unit 400 whereby each of the valves 220 - 224 may be controlled by the control unit 400 independently. For the sake of legibility, fig. 1 shows only the connection of the valve 224 of the dispensing unit 5 to the control unit 400 via the control line 414. The remaining valves 220, 221, 222, 223 of the remaining dispensing units 1, 2, 3, 4 are connected in an analogous manner to the control unit 400 as described above. The control unit 400, on the other hand, is connected via a signal line 430 to a pressure sensor 420 provided on the aerodynamic surface 100, here on the wing airfoil of the aircraft, on the trailing edge of this airfoil, and, via a signal line 520-524, to a pressure sensor 540-544 in the nozzle 210 - 214.

The outlet openings 250-254 of the nozzles 210-214 are arranged uniformly in a line substantially parallel to the leading edge of the wing at a distance of 30% of the chord length from that edge. The location of the outlet openings 250-254 of the nozzles 210-214 corresponds to the line of occurrence of flow separation during landing of the aircraft.

In another embodiment, the outlet openings 250-254 may be located at any distance between 1 and 30% of the chord length from the leading edge.

Each of the nozzles 210, 211, 212, 213, 214 is connected to the distributing valve 220, 221, 222, 223, 224 via a rigid connection. The nozzles 210 - 214 may also be connected to their associated valves 220 - 224 via a flexible connection of any length. The valves 220 - 224 allow the flow direction in the nozzles 210 - 214 to be changed by moving a piston through an electromagnetic coil. Depending on the position of the piston, compressed air from the compressor is directed to the nozzle 210 - 214, or the flow in the nozzle is stopped or the flow occurs in the opposite direction due to the vacuum generated by the vacuum pump. Each of the valves 220 - 224 has the electromagnetic coil which ensures that the valve operates at a frequency of 1 to 1000 Hz. Each valve 220-224 is located at substantially the same distance from its corresponding nozzle 210, 211, 212, 213, 214, respectively. Moreover, all valves 220 - 224 are substantially the same in size and flow characteristics.

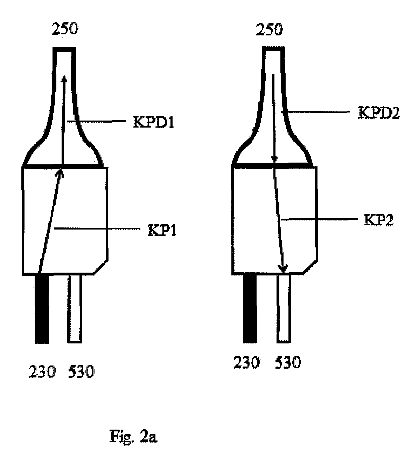

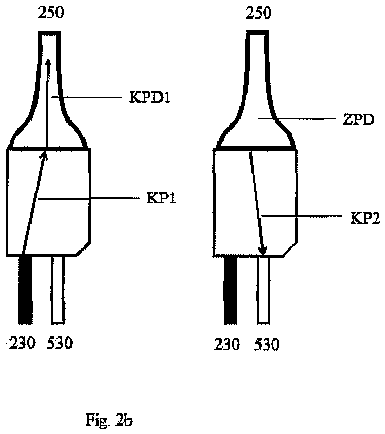

Figures 2a and 2b show schematically operation of the dispensing unit 1, consisting of the nozzle 210 and the distributing valve 220, wherein the presented diagram also applies to the remaining units 2, 3, 4, 5, each consisting of the nozzle 211, 212, 213, 214 and the distributing valve 221, 222, 223, 224. Figure 2a shows a variant of the method with bidirectional flow, while fig. 2b shows a variant of the method with two states: flow and stopped flow. In the variant shown in fig. 2a, in the first time interval flow occurs from the conduit 230 connected to the compressed air source 300 to the outlet opening 250 of the nozzle 210 in the flow direction KP1, wherein the conforming to it flow direction in the nozzle has been marked as KPD1. In the second time interval, after switching to the vacuum source 500, such as a vacuum pump, flow occurs from the opening 250 to the conduit 530 connected to the vacuum pump in the flow direction KP2 which is opposite to the flow direction KP1, with the result that in the nozzle there is a flow in the flow direction KPD2, which is opposite to the direction KPD1. In the second variant shown in fig. 2b, in the first time interval flow occurs from the conduit 230 connected to the compressed air source 300 to the outlet opening 250 of the nozzle 210 in the flow direction KP1, wherein the conforming to it flow direction in the nozzle has been marked as KPD1, while in the second time interval, after switching to the vacuum source 500, such as a vacuum pump, the flow stopping, marked as ZPD, in the nozzle 210 occurs.

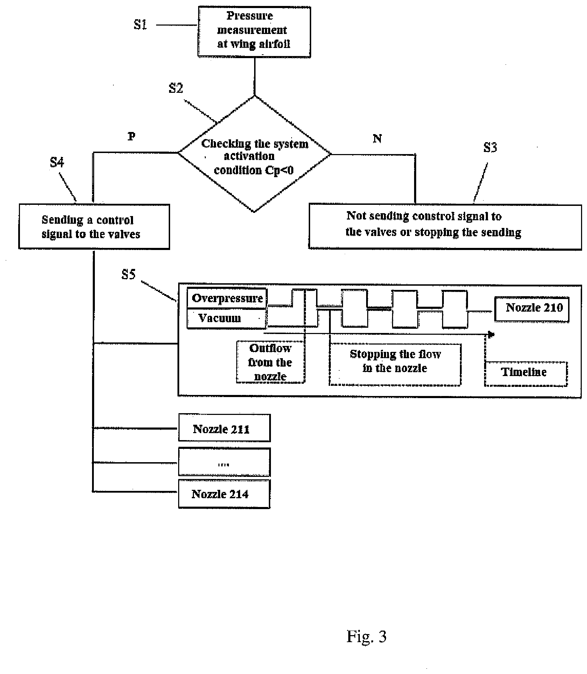

Fig. 3 shows an embodiment of the method for actively controlling flow on an aerodynamic surface in the system according to the invention. In step S1, pressure is measured on the wing airfoil 100 by the pressure sensor 420. The measured value is transmitted via the signal line 430 to the control unit 400, where the activation condition of the system is checked in the step S2. The checking of the system activation condition consists in determining whether the pressure coefficient Cₚ, calculated on the basis of the measured pressure on the wing airfoil 100 in step S1 and being the ratio of the difference between the local value of the static pressure p measured on the airfoil and the undisturbed flow pressure *p*_{∞} to the dynamic flow pressure *q,* is negative. If Cₚ value is non-negative at the trailing edge of the airfoil, then separation does not occur and the control unit 400 in step S3 does not send control signal to dispensing units 1-5 or stops sending the signal, if the previously measured Cₚ value was negative. If Cₚ value is negative, the control unit 400 in step S4 sends the control signal to each dispensing unit 1-5 via control lines 410, 411, 412, 413 and 414, respectively. The control signals transmitted via the control lines 410-414 may be independent of each other, so that each dispensing unit 1-5 can be controlled independently, and therefore the flow through each of the nozzles 210-214 can be independently controlled by appropriate valves. The sequence of signals controlling the operation of individual valves 220 - 224 is stored in the memory of the control unit 400. The control of each of the nozzles 210 - 214 by the corresponding valves 220 - 224, respectively, in step S5 is exemplified by the valve 220 connected to the nozzle 210. The valve 220 alternately connects the nozzle to the compressed air source 300 and the vacuum source 500 cyclically at equal intervals of time. The independent control of the valves 221 - 224 of the remaining nozzles 211-214 is performed analogously. The compressed air flowing from the nozzles 210-214 through the openings 250-254 during the operation of the valves comes from the excess of the air generated by the turbine engine compressor while the vacuum comes from the vacuum pump. The application of the vacuum is intended to inhibit the flow from the nozzle 210, 211, 212, 213 and 214, or to generate the flow in the opposite direction, which enables high frequency pulsation to be obtained.

In one embodiment of the method for actively controlling flow on an aerodynamic surface, the method provides a pulsating blow off up to q = 0.004 kg/s of air from each nozzle 210-214 at a frequency f = 300 Hz, thanks to the use of the electromagnetic valves 220-224 operating at a frequency f_{z} = 300 Hz opened and closed alternately with an interval t = 1 ms and supplied with air from a compressor providing in the nozzle an overpressure P= 60,000 Pa and a vacuum of 15,000 Pa relative to the atmospheric pressure.

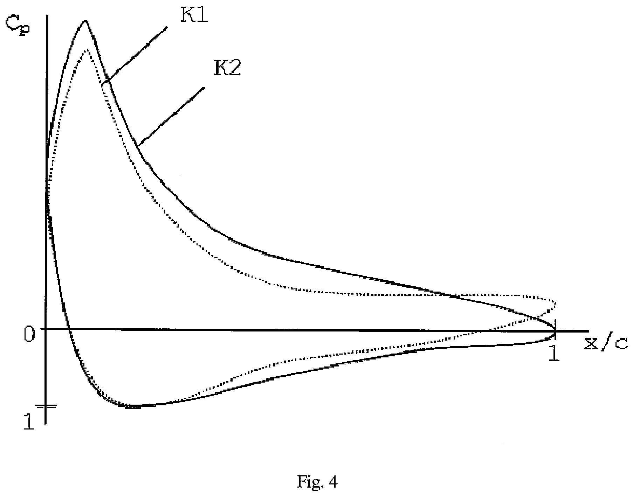

Fig. 4 shows the diagram of the pressure coefficient Cₚ depending on the ratio of the distance from the leading edge to the chord length. The pressure distribution along the chord c of the wing profile in the separation state without applying the solution according to the invention is represented by the curve K1, while after the flow separation is eliminated using the solution according to the invention - by the curve K2. The curve K1 shows the distribution of the coefficient Cₚ characteristic for the flow of air around the wing in case of flow separation. Flattening of the curve Cₚ from x/c = 0.5 and negative value of that coefficient on the trailing edge for x/c = 1 are visible. The curve K2 shows the distribution of the coefficient Cₚ for the flow around the wing without separation, it is characteristic that for x/c = 1 the value of the coefficient Cₚ = 0.

The solution according to the invention can be industrially applicable, especially in the aviation industry, where it is desired to inhibit or delay the occurrence of the flow detachment phenomenon on the wing of an aircraft.

## Claims

1. System for actively controlling flow on aerodynamic surface (100) including at least one dispensing unit (1, 2, 3, 4, 5), a control unit (400), a compressed air source (300), and a sensor (420) provided on the aerodynamic surface (100), wherein the dispensing unit (1, 2, 3, 4, 5) has a nozzle (210, 211, 212, 213, 214) terminating in an outlet opening (250, 251, 252, 253, 254) in the aerodynamic surface (100), and a valve (220, 221, 222, 223, 224) which is connected to the nozzle (210, 211, 212, 213, 214) and through which each dispensing unit (1, 2, 3, 4, 5) is in fluid communication with the compressed air source (300), and furthermore a sensor (540, 541, 542, 543, 544) is provided in at least one nozzle (210, 211, 212, 213, 214) and the sensors (420, 540, 541, 542, 543, 544) are connected to the control unit (400), which control unit (400) is connected separately to each of the valves (220, 221, 222, 223, 224) of the dispensing units (1, 2, 3, 4, 5), **characterized in that** it comprises a vacuum source (500) wherein the - connected to the nozzle (210, 211, 212, 213, 214) - valve (220, 221, 222, 223, 224) of each of the dispensing units (1, 2, 3, 4, 5) is a distributing valve connected to the compressed air source (300) and to the vacuum source (500) and this distributing valve (220, 221, 222, 223, 224) allows the alternating supplying air from the compressed air source (300) to the nozzle (210, 211, 212, 213, 214) and drawing air from the nozzle (210, 211, 212, 213, 214) by means of the vacuum source (500).

2. The system according to claim 1, **characterized in that** each dispensing unit (1, 2, 3, 4, 5) is in fluid communication with the compressed air source (300) via a pneumatic conduit (230) connected to the valves (220, 221, 222, 223, 224).

3. The system according to claim **1, characterized in that** each dispensing unit (1, 2, 3, 4, 5) is in fluid communication with the vacuum source (500) via a pneumatic conduit (530) connected to the valves (220, 221, 222, 223, 224).

4. The system according to claim 1, **characterized in that** the outlet openings (250, 251, 252, 253, 254) of the nozzles (210, 211, 212, 213, 214) are located in the line of occurrence of flow separation on the aerodynamic surface (100).

5. The system according to claim 1, **characterized in that** the valves (220, 221, 222, 223, 224) are connected directly to the nozzle (210, 211, 212, 213, 214) via a rigid connection.

6. The system according to claim 1, **characterized in that** the valves (220, 221, 222, 223, 224) are connected to the nozzle (210, 211, 212, 213, 214) via a flexible connection of any length

7. The system according to claim 1, **characterized in that** each distributing valve (220, 221, 222, 223, 224) includes an element for alternating switching the flow from the compressed air source (300) to the nozzle (210, 211, 212, 213, 214) and from the nozzle (210, 211, 212, 213, 214) to the vacuum source (500) actuated by means of an electromagnetic coil or piezoelectric system.

8. The system according to claim 1, **characterized in that** the opening and closing element of the valve (220, 221, 222, 223, 224) is a ball or a piston.

9. The system according to claim 1, **characterized in that** the electromagnetic coil of the distributing valve (220, 221, 222, 223, 224) ensures the oscillation of the switching element with a frequency from 1 to 1000 Hz.

10. The system according to claim 1, **characterized in that** the compressed air source (300) is one of an aircraft turbine engine compressor, a dedicated compressor, a compressor system powered by the aircraft electrical system, and a compressor system powered by a dedicated battery.

11. The system according to claim 1, **characterized in that** the vacuum source (500) is one of a dedicated pump, a pump system powered by aircraft electrical system, and a pump system powered by a dedicated battery, or the vacuum is caused by a flow of external gas.

12. The system according to claim 1, **characterized in that** all the distributing valves (220, 221, 222, 223, 224) have the same technical parameters or at least one of the distributing valves (220, 221, 222, 223, 224) has different technical parameters to the others.

13. The system according to claim 1, **characterized in that** the sensor (420) provided on the aerodynamic surface (100) is a pressure sensor.

14. The system according to claim 13, **characterized in that** the aerodynamic surface (100) is an aircraft wing.

15. The system according to claim 13, **characterized in that** the aerodynamic surface (100) is an inlet or outlet channel of a fluid-flow machine.

16. The system according to claim 1, **characterized in that** the sensor (540, 541, 542, 543, 544) provided in each nozzle (210, 211, 212, 213, 214) is a pressure sensor or a sensor of velocity of air flow through the nozzle (210, 211, 212, 213, 214).

17. A method for actively controlling flow on aerodynamic surface (100), in which a physical quantity is measured on the aerodynamic surface (100), on the basis of which the physical quantity an occurrence of flow separation phenomenon on the aerodynamic surface (100) is determined and then, after detecting the occurrence of the flow separation on the aerodynamic surface (100), a compressed air from a compressed air source (300) is supplied onto the aerodynamic surface (100) through row of outlet openings (250, 251, 252, 253, 254) in the aerodynamic surface (100) and the nozzles (210, 211, 212, 213, 214) connected to the outlet openings (250, 251, 252, 253, 254) until it is detected that the flow separation on the aerodynamic surface (100) has disappeared, wherein the air supplied to each of the outlet openings (250, 251, 252, 253, 254) has a pulsating flow, **characterized in that** the pulsating air flow in the outlet openings (250, 251, 252, 253, 254) is achieved by alternately supplying each nozzle (210, 211, 212, 213, 214) with air from the compressed air source (300) and drawing air from the nozzle (210, 211, 212, 213, 214) using a vacuum source (500).

18. The method according to claim 17, **characterized in that** alternate supplying of compressed air to each nozzle (210, 211, 212, 213, 214) and drawing of a stream flowing from the nozzle (210, 211, 212, 213, 214) is carried out through a distributing valve (220, 221, 222, 223, 224), alternating switching between the compressed air source (300) and the vacuum source (500).

19. The method according to claim 17, **characterized in that** the vacuum value is selected by a control system on the basis of the value of the signal from a sensor (540, 541, 542, 543, 544) provided in the nozzle (210, 211, 212, 213, 214) in such a way that there is an accelerated stopping of the flow in the nozzle (210 , 211, 212, 213, 214) after switching the valve (220, 221, 222, 223, 224) from supplying compressed air to the nozzle (210, 211, 212, 213, 214) to supplying it from the vacuum source (500).

20. The method according to claim 17, **characterized in that** air is supplied onto the aerodynamic surface (100) through all the outlet openings (250, 251, 252, 253, 254) simultaneously, through every second outlet opening (250, 251, 252, 253, 254) in the row or sequentially through each successive outlet opening (250, 251, 252, 253, 254) in the row.

21. The method according to claim 17, **characterized in that** the measured physical quantity is the pressure at the trailing edge of the aerodynamic surface (100), while as a condition for the occurrence of the flow separation it is assumed that a value of pressure coefficient Cp calculated from the pressure measurement is negative.

22. The method according to claim 17, **characterized in that** by alternately supplying compressed air to each nozzle (210, 211, 212, 213, 214) and drawing the air flow, an alternating flow in two mutually opposite directions is obtained in the nozzle (210, 211, 212, 213, 214).

23. The method according to claim 17, **characterized in that** by alternately supplying compressed air to each nozzle (210, 211, 212, 213, 214) and drawing the air flow, alternating states of air flow and air flow stopping are obtained in the nozzle (210, 211, 212, 213, 214).
